# EUROPÄISCHE PATENTSCHRIFT

(11) **EP 1 555 284 B1**
(45) Veröffentlichungstag und Bekanntmachung des Hinweises auf die Patenterteilung: **07.11.2007**
(21) Anmeldenummer: 04029286.4
(22) Anmeldetag: 10.12.2004
(51) Int. Cl.: C08J 9/18

(54) **Expandierte Polyolefinpartikel enthaltend spezielle Keimbildner**
Expanded polyolefin particles comprising specific nucleating agents
Particules de polyoléfine expansées comprenant des agents nucléants specifques

(30) Priorität: 15.01.2004 DE 102004002367
(43) Veröffentlichungstag der Anmeldung: 20.07.2005
(73) Patentinhaber: BASF Aktiengesellschaft, 67056 Ludwigshafen (DE)
(72) Erfinder: Braun, Frank, Dr., 67063 Ludwigshafen (DE)

(56) Entgegenhaltungen:
- EP-A- 0 588 321
- EP-A- 1 281 729
- DE-A1- 10 230 583
- US-A- 5 108 673

## Beschreibung

Die Erfindung betrifft expandierte Pololefinpartikel mit einer Schüttdichte von maximal 70 g/l, enthaltend 0,1 bis 10 Gew.-%, bezogen auf das expandierte Polyolefin, mindestens eines partikelförmigen Nukleierungsmittels ausgewählt aus Perylen-Verbindungen, Phthalocyanin-Verbindungen, Chinophthalon-Verbindungen und Isoindolin-Verbindungen.

Außerdem betrifft die Erfindung ein Verfahren zur Herstellung der expandierten Polyolefinpartikel, weiterhin die Verwendung der expandierten Polyolefinpartikel zur Herstellung von Polyolefin-Schaumstoffen, und schließlich Polyolefin-Schaumstoffe, erhältlich aus den expandierten Polyolefinpartikeln.

Expandierte Polyolefinpartikel werden aus einem Polyolefin, einem Treibmittel und einem Nukleierungsmittel hergestellt. Die Herstellung kann beispielsweise in Suspension oder durch Extrusion erfolgen.

Beim Suspensionsverfahren wird das Polyolefin als ein nukleierungsmittelhaltiges Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen (expandierbaren) Partikel werden durch Erwärmen zu den expandierten Partikeln verschäumt, siehe z.B. WO 01/29119 und EP-A 1 281 729. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. EP-A 53 333 und 611 795.

Beim Extrusionsverfahren wird das Polyolefin in einem Extruder unter Aufschmelzen mit einem Nukleierungsmittel und einem Treibmittel vermischt, das dem Extruder zugeführt wird. Die treibmittelhaltige Mischung wird entweder unter solchen Druck- und Temperaturbedingungen ausgepresst und granuliert, dass das Polyolefingranulat nicht schäumt (expandiert), wozu beispielsweise eine Unterwassergranulierung verwendet wird, die bei einem Wasserdruck von mehr als 2 bar betrieben wird, siehe EP-A 1 132 420. Man erhält treibmittelhaltige, expandierbare Partikel, die durch anschließendes Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel, siehe EP-A 588 321 und DE-A 197 56 264.

Als Nukleierungsmittel wird beispielsweise Talkum, Polyethylenwachs, Ruß, pyrogene Kieselsäure oder Bentonit werwendet. Es ermöglicht das Schäumen und bewirkt, dass bei der Expansion des treibmittelhaltigen Polyolefins ein feinzelliger Schaum entsteht.

W. Herbst, K. Hunger: Industrielle Organische Pigmente, 2. Auflage, VCH, Weinheim 1995 (nachfolgend kurz als Herbst bezeichnet), offenbart in Kap. 1.6.4.3 auf den Seiten 75-76, dass organische Pigmente bei bestimmten Polyolefinen als Keimbildner für die Kristallisation des Kunststoffs wirken können, und beschreibt, dass dies die mechanischen Eigenschaften des Kunststoffs nachteilig verändert. Genannt werden u.a. starke Verzugserscheinungen, Spannungen, Schwindungsanomalien, Spannungsrisskorrosion, schlechtere Zugfestigkeit, Reißdehnung und Schlagzähigkeit etc. bis hin zur Unbrauchbarkeit des Kunststoffteils. Demnach wird der Keimbildnereffekt der Pigmente als überaus negativ beschrieben. Polymerschäume werden nicht erwähnt.

Der Expansionsfaktor des expandierten Polyolefins, und damit die Schüttdichte der expandierten Partikel, lässt sich durch die Treibmittelmenge und die zum Verschäumen gewählte Temperatur einstellen. Dabei werden bei Verwendung üblicher Polyolefine hohe Expansionsfaktoren, also niedrige Schüttdichten, nur dann erzielt, wenn hohe Treibmittelmengen und hohe Schaum-Temperaturen gewählt werden.

Die EP-A 611 795 lehrt in den Beispielen, dass sich im Suspensionsverfahren aus 1000 g Polypropylen und 120 g Isobutan (also 12 Gew.-Teile Treibmittel pro 100 Gew.-Teile Polymer) expandierte Partikel mit Schüttdichten von 25 bis 30 g/l herstellen lassen. Allerdings weisen die aus diesen Partikeln hergestellten Formteile nur dann gute Eigenschaften auf, wenn das eingesetzte Polyolefin ein spezielles Polypropylen ist, dass mittels bestimmter Metallocenkatalysatoren hergestellt wurde. Bei Verwendung von anderen, nicht metallocenkatalysierten Polypropylenen (Vergleichsbeispiele) weisen die Formteile unebene Oberflächen und/oder zahlreiche Hohlräume auf und sind unbrauchbar.

Die DE-A 3431245 beschreibt ein Suspensionsverfahren mit Explosionsexpansion, bei dem gemäß den Beispielen mit 13 bis 21 Gew.-Teilen Isobutan pro 100 Gew.-Teile Polypropylen Schüttdichten von 14 bis 29 g/l erhalten werden. Es werden jedoch nur dann geschäumte Teilchen mit gleichmäßigen Zellgrößen und guten Eigenschaften erhalten, wenn die erhitzte Suspension durch Zudosieren von Stickstoff oder einem anderen anorganischen Gas unter genau einzuhaltenden Druckbedingungen entspannt wird: zum Beginn des Entspannens soll der erforderliche Druck 18 bis 40, und zum Ende des Entspannens muss er noch mindestens 5 kg/cm²G betragen, wobei u.a. der Anfangsdruck und die Kesselfüllhöhe zu beachten sind. Dieser aufwändige Entspannungsvorgang und die Gaszudosierung verkomplizieren das Verfahren, und bei Nichteinhalten der Druckbedingungen erhält man Partikel mit undefinierbarer Zellstruktur.

Aus wirtschaftlichen und ökologischen Gründen wäre es vorteilhaft, möglichst wenig Treibmittel einzusetzen. Es ist jedoch mit den Verfahren des Standes der Technik entweder überhaupt nicht möglich, mit einer geringen Treibmittelmenge hohe Expansionsfaktoren bzw. geringe Schüttdichten zu erzielen (auch dann nicht, wenn man bei hohen Temperaturen verschäumt), oder es müssen ganz bestimmte Metallocen-Polypropylene verwendet werden, um aus Partikeln geringer Schüttdichte brauchbare Formteile zu erhalten, oder man muss eine Suspension in aufwändiger Weise bei genau einzuhaltenden Bedingungen entspannen, da ansonsten unbrauchbare Partikel erhalten werden.

Es bestand die Aufgabe, den geschilderten Nachteilen abzuhelfen. Insbesondere sollten expandierte Polyolefinpartikel bereitgestellt werden, zu deren Herstellung trotz einer geringen Schüttdichte nur wenig Treibmittel erforderlich ist. Die Polyolefinpartikel sollten sich aus allen üblichen Polyolefinen herstellen lassen, insbesondere auch aus solchen Polyolefinen, die nicht via Metallocene hergestellt werden. Bei der Herstellung durch Explosionsexpansion sollte ohne spezielle Bedingungen entspannt werden können.

Demgemäß wurden die eingangs definierten expandierten Polyolefinpartikel gefunden, sowie das dort genannte Verfahren, die Verwendung und die Polyolefin-Schaumstoffe. Bevorzugte Ausführungsformen der Erfindung sind den Unteransprüchen zu entnehmen.

Überraschenderweise wurde gefunden, dass bei Verwendung ganz bestimmter Nukleierungsmittel deutlich weniger Treibmittel benötigt wird. Werden diese Nukleierungsmittel verwendet, lassen sich expandierte Polyolefinpartikel mit Schüttdichten von maximal 70 g/l problemlos mit geringen Treibmittelmengen herstellen.

Als Polyolefine sind insbesondere geeignet:
a) Homopolypropylen,
b) Randomcopolymere des Propylens mit 0,1 bis 15, bevorzugt 0,5 bis 12 Gew.-% eines Comonomeren. Bevorzugtes Comonomer ist Ethylen oder ein C₄₋₁₀-α-Olefin oder deren Mischungen. Besonders bevorzugte Randomcopolymere sind Copolymere von Propylen mit 0,5 bis 6 Gew.-% Ethylen oder mit 0,5 bis 15 Gew.-% But-1-en, oder ein Terpolymer aus Propylen, 0,5 bis 6 Gew.-% Ethylen und 0,5 bis 6 Gew.-% But-1-en,
c) Mischungen der unter a) oder b) genannten Polymere mit 0,1 bis 75, bevorzugt 3 bis 50 Gew.-% eines Polyolefin-Elastomeren, z.B. eines Ethylen-Propylen-Blockcopolymeren mit 30 bis 70 Gew.-% Propylen,
d) Polyethylene, beispielsweise LD (low density), LLD (linear low density), MD (medium density) oder HD (high density), HMW (high molecular weight) oder UHMW (ultra high molecular weight), oder
e) Mischungen der unter a) bis d) genannten Polymere, wobei ggf. Phasenvermittler mitverwendet werden, um die Phasenanbindung der in manchen Fällen unverträglichen Polymere zu verbessern.

Der Kristallitschmelzpunkt geeigneter Polyolefine liegt üblicherweise im Bereich von 90 bis 170°C. Er ist beispielsweise als Peakmaximum im Differential Scanning Calorimetry (DSC)-Diagramm bestimmbar. Die Schmelzwärme der Polyolefine ist ebenfalls per DSC bestimmbar und beträgt im allgemeinen 20 bis 300 J/g. Der Schmelzflussindex (MFI, melt flow index) des Polyolefins beträgt in der Regel 0,1 bis 100 g/10 min, ermittelt bei 230°C und 2,16 kg Belastung für Propylenpolymere bzw. 190°C und 2,16 kg Belastung für Ethylenpolymere, nach DIN 53 735.

Bevorzugt verwendet man als Polyolefin ein Polypropylen. Bevorzugte Polyolefine sind Homo- oder Copolymere des Propylens mit bis zu 15 Gew.-% Etylen und/oder But-1-en, besonders bevorzugt sind Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm³, auf.

Die Polyolefine sind bekannt und können nach allen üblichen Verfahren erhalten werden, beispielsweise nach dem Hochdruck- (ICI), Mitteldruck- (Phillips), Niederdruck-(Ziegler), Gasphasen-, Gasphasenwirbelbett- oder Metallocen-Verfahren.

Das Polyolefin kann mit bis zu 50 % seines Gewichts eines weiteren Thermoplasten mit einer Glasübergangstemperatur (bestimmbar z.B. als Wendepunkt im DSC-Diagramm) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. Exxon), zugesetzt werden können.

Es hat sich gezeigt, dass die Erfindung auch ohne Zumischen eines solchen weiteren Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-Propylen-Copolymerisate, die zur Elastifizierung zugesetzt werden können, zählen in diesem Sinne nicht zu den weiteren Thermoplasten.

Das Polyolefin kann als handelsübliches Granulat, Pulver, Grieß oder sonstiger Form eingesetzt werden. Zweckmäßigerweise wird ein Granulat eingesetzt. Geeignet ist z.B. ein sog. Minigranulat mit einem bevorzugten mittleren Durchmesser von 0,2 bis 10, insbesondere von 0,5 bis 5 mm. Dieses meist zylinderförmige oder runde Minigranulat wird hergestellt durch Extrudieren des Polyolefins, ggf. zusammen mit dem Nukleierungsmittel und/oder dem zuzumischenden Thermoplasten, und weiteren Zusatzstoffen, Auspressen aus dem Extruder, gegebenenfalls Abkühlen und Granulieren. Bei zylinderförmigem Minigranulat beträgt die Länge bevorzugt 0,2 bis 10, insbesondere 0,5 bis 5 mm. Das Granulat kann auch plättchenförmig geformt sein.

Das Nukleierungsmittel ist partikelförmig, und ausgewählt aus Perylen-Verbindungen, Phthalocyanin-Verbindungen, Chinophthalon-Verbindungen und Isoindolin-Verbindungen. Es ermöglicht das Schäumen und bewirkt, dass bei der Expansion des treibmittelhaltigen Polyolefins ein feinzelliger Schaum entsteht.

Als Perylen-Verbindungen kommen Verbindungen der Perylen-3,4,9,10-tetracarbonsäure (Formel 1) bzw. des entsprechenden Dianhydrids (Formel 2) in Betracht.

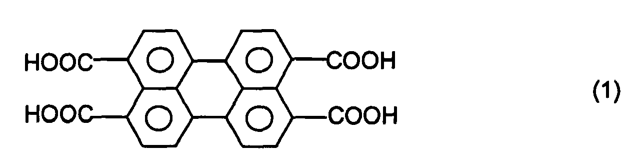

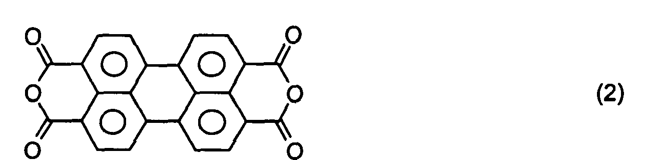

Bevorzugte Perylen-Verbindungen weisen die Formel 3 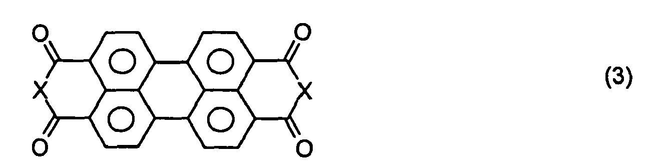 auf, wobei bedeutet
- X:: O oder N-R, und
- R:: H, CH₃ oder unsubstituiertes oder substituiertes Phenyl; falls R substituiertes Phenyl bedeutet, ist der Phenylring bevorzugt durch Methyl, Methoxy, Ethoxy oder -N=N-Phenyl substituiert.

Die Perylen-Verbindungen sind in an sich bekannter Weise erhältlich. Beispielsweise wird das Dianhydrid der Formel 2 hergestellt aus 1,8-Naphthalindicarbonsäureimid (Naphthalsäureimid) durch Ätzalkalischmelze und anschließende Luftoxidation der Schmelze. Das gebildete Bisimid (Peryldiimid) wird mit konz. Schwefelsäure zum Dianhydrid hydrolysiert. Daraus stellt man die Perylen-Verbindung üblicherweise her durch Erhitzen des Dianhydrids der Formel 2 mit primären aliphatischen oder aromatischen Aminen, ggf. in Gegenwart von Reaktionsbeschleunigem wie Schwefelsäure, Phosphorsäure oder Zinksalzen. Man kann auch in alkalischen Medium kondensieren. Alternativ kann man das entsprechend substituierte Naphthalsäureimid mit Alkali aufschmelzen. Man erhält in jedem Falle die Rohform der Verbindung, die in üblicher Weise nachbehandelt wird, beispielsweise durch Umfällen aus Schwefelsäure, Mahlprozesse oder Rekristallisation aus Lösungsmitteln.

Weitere Einzelheiten zur Herstellung und Nachbehandlung sind Herbst, darin insbesondere den Seiten 482-486 und 622, zu entnehmen.

Besonders bevorzugt verwendet man als Perylen-Verbindung Perylen-Pigmente , ausgewählt aus Pigment Red 123 (71145), Pigment Red 149 (71137), Pigment Red 178 (71155), Pigment Red 179 (71130), Pigment Red 190 (71140), Pigment Red 224 (71127), Pigment Violet 29 (71129), Pigment Black 31 (71132) und Pigment Black 32 (71133), wobei in Klammem die Formelnummer des Colour Index C.I. angegeben ist.

Die Strukturformeln der genannten Perylen-Verbindungen und weitere Einzelheiten können dem Colour Index oder den Seiten 486-492 von Herbst entnommen werden.

Als Phthalocyanin-Verbindungen kommen das Kupferphthalocyaninblau der Formel 4 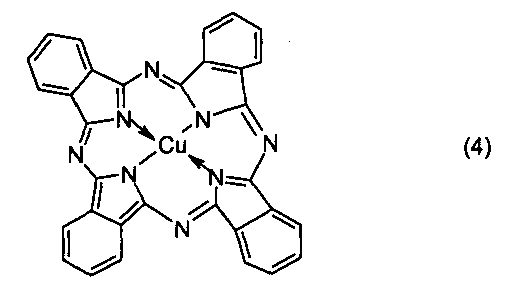 und dessen Derivate in Betracht, insbesondere die polychlorierten und chlorbromierten Kupferphthalocyanine.

Die Phthalocyanin-Verbindungen sind in an sich bekannter Weise erhältlich, beispielsweise a) aus Phthalodinitril oder substituiertem Phthalodinitril und Metall bzw. Metallsalz, b) aus Phthalsäureanhydrid, Phthalsäure, Phthalsäureester, Diammoniumphthalat, Phthalamid oder Phthalimid und Harnstoff, Metallsalz und Katalysator, oder c) aus o-Cyanbenzamid und Metall oder Metallsalz. Variante a), der sog. Phthalodinitril-Prozess, und Variante b), der sog. Phthalsäureanhydrid-Hamstoff-Prozess, können lösungsmittelfrei im Back-Verfahren, oder als Lösemittelverfahren durchgeführt werden. Durch Nachbehandlung (Konditionierung) der Rohprodukte, insbesondere Lösen, Mahlen oder Behandeln mit Schwefelsäure sind bestimmte Modifikationen erhältlich, beispielsweise α-, β-, γ-, δ- und ε-Phthalocyanine.

Weitere Einzelheiten zur Herstellung und Nachbehandlung sind Herbst, darin insbesondere den Seiten 432-450 und 615 zu entnehmen.

Besonders bevorzugt verwendet man als Phthalocyanin-Verbindung Phthalocyanin-Pigmente, ausgewählt aus Pigment Blue 15 (74160), Pigment Blue 15:1 (74160), Pigment Blue 15:2 (74160), Pigment Blue 15:3 (74160), Pigment Blue 15:4 (74160), Pigment Blue 15:6 (74160), Pigment Blue 16 (74100), Pigment Green 7 (74260) und Pigment Green 36 (74265), wobei in Klammem die Formelnummer des Colour Index C.I. angegeben ist.

Weitere Einzelheiten zu den Phthalocyanin-Verbindungen können dem Colour Index oder den Seiten 450 - 461 von Herbst entnommen werden.

Geeignete Chinophthalon-Verbindungen sind Chinophthalon, Formel 5 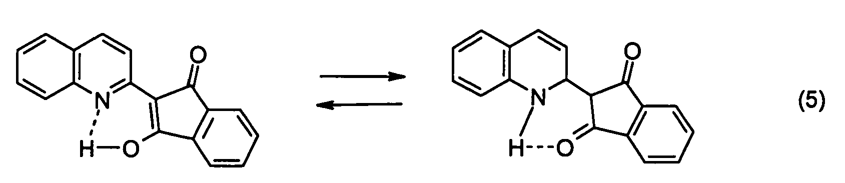 das z.B. durch Reaktion von Chinaldin mit Phthalsäureanhydrid in hochsiedenden Lösungsmitteln gewonnen wird, und dessen Derivate. Letztere können beispielsweise hergestellt werden, indem man a) geeignete Substituenten einführt, z.B. Acylaminogruppen, Chlor- oder Bromatome, oder b) Chinaldine mit Pyromellitsäureanhydrid statt Phthalsäureanhydrid kondensiert, oder c) das Molekül über Diamidbrücken verdoppelt. Zur Herstellung halogensubstituierter Chinophthalon-Verbindungen setzt man z.B. tetrahalogensubstituiertes Phthalsäure-2,3-dicarbonsäureanhydrid mit Chinaldin um.

Ganz besonders bevorzugt verwendet man als Chinophthalon-Verbindung das Chinophthalon-Pigment Pigment Yellow 138 (56300) verwendet, wobei in Klammem die Formelnummer des Colour Index C.I. angegeben ist. Es ist erhältlich durch Reaktion von 8-Aminochinaldin mit Tetrachlorphthalsäureanhydrid in inerten Lösungsmitteln in Gegenwart von Zinkchlorid erhältlich, siehe DE-A 1 770 960.

Weitere Einzelheiten zu den Chinophthalon-Verbindungen können dem Colour Index oder den Seiten 567-570 von Herbst entnommen werden.

Als Isoindolin-Verbindungen kommen Verbindungen in Betracht, die sich vom Isoindolin, Formel 6, 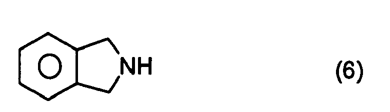 ableiten. Bevorzugt sind Verbindungen der Formel 7 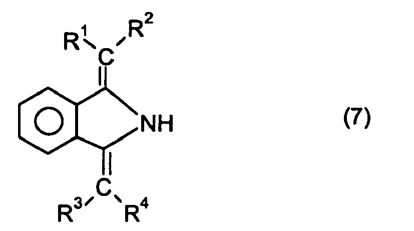 worin R¹ bis R⁴ unabhängig voneinander CN, CONH-Alkyl oder CONH-Aryl bedeuten, oder R¹ und R² bzw. R³ und R⁴ sind jeweils Glieder eines heterocyclischen Ringes.

Zur Herstellung der Isoindolin-Verbindungen setzt man in der Regel zunächst o-Phthalodinitril mit Ammoniak zu Diiminoisoindolin (1-Amino-3-iminoisoindolenin) um. Diiminoisoindolin wird mit einem Cyanacetamid NCCH₂CONHR und einer aktiven Methylenverbindung, z.B. Barbitursäure, zum Endprodukt umgesetzt.

Besonders bevorzugt verwendet man als Isoindolin-Verbindung Isoindolin-Pigmente, ausgewählt aus Pigment Yellow 139 (56298), Pigment Yellow 185 (56280), Pigment Orange 66 (48210), Pigment Orange 69 (56292) und Pigment Red 260 (56295), wobei in Klammern die Formelnummer des Colour Index C.I. angegeben ist.

Pigment Yellow 139 (56298) ist beispielsweise erhältlich durch Reaktion von Diiminoisoindolin mit Barbitursäure und Ameisensäure, siehe DE-A 2 628 409 und 2 041 999. Alternative Verfahren sind in den DE-A 3 022 839, 3 935 858 und 2 757 982 beschrieben.

Weitere Einzelheiten zu den Isoindolin-Verbindungen können dem Colour Index oder den Seiten 413-414, 418-420 und 423-428 von Herbst entnommen werden.

Es versteht sich, dass auch Mischungen verschiedener Perylen-Verbindungen, verschiedener Phthalocyanin-Verbindungen, verschiedener Chinophthalon-Verbindungen oder verschiedener Isoindolin-Verbindungen, verwendet werden können.

Erfindungsgemäß enthalten die expandierten Polyolefinpartikel 0,1 bis 10 Gew.-%, bevorzugt 0,5 bis 6 Gew.-%, und besonders bevorzugt 1 bis 5 Gew.-% des partikelförmigen Nukleierungsmittels, bezogen auf das expandierte Polyolefin, und bei vorstehenden Mischungen gerechnet als Summe aller Perylen-Verbindungen, Phthalocyanin-Verbindungen, Chinophthalon-Verbindungen und Isoindolin-Verbindungen.

Bei der Partikelgröße des Nukleierungsmittels kann man zwischen den sog. Primärteilchen (bei der Herstellung zunächst entstehende feinteilige Kristalle, reale Einkristalle), Aggregaten (entstehen aus Primärteilchen durch flächiges Verwachsen, d.h. Primärteilchen sind über die Flächen verbunden) und Agglomeraten (Zusammenlagerungen von Einzelteilchen und/oder Aggregaten, an Ecken und Kanten miteinander verbunden, jedoch nicht flächig verwachsen) unterscheiden. Die Primärteilchen sind in der Regel kleiner als 1 *µ*m, z.B. 0,05 bis 0,5 *µ*m groß. Aggregate sind üblicherweise 0,5 bis 5 *µ*m groß und werden beim Dispergieren im Polyolefin nicht getrennt. Die Größe der Agglomerate beträgt in der Regel 2 bis 100 µm, während des Dispergierens sind sie voneinander zu trennen.

Die erfindungsgemäßen expandierbaren Polyolefinpartikel können nach dem Suspensionsverfahren oder nach dem Extrusionsverfahren hergestellt werden wie eingangs bereits erwähnt, und die erfindungsgemäßen Nukleierungsmittel werden dabei in üblicher Weise zugegeben. Insbesondere kann man das Polyolefin vorab mit dem Nukleierungsmittel mischen, oder es erst bei der Herstellung der expandierten Partikel zufügen.

Beispielsweise kann man beim Suspensionsverfahren das Nukleierungsmittel bei der Herstellung des erwähnten Polyolefin-Minigranulats zugeben, d.h. das Minigranulat enthält bereits das Nukleierungsmittel. Ebenso bevorzugt kann man beim Extrusionsverfahren das Nukleierungsmittel in den Extruder, in dem auch das Treibmittel eingemischt wird, eindosieren. Das erfindungsgemäße Nukleierungsmittel kann als solches, oder z.B. vermischt mit üblichen Dispergierhilfsmitteln, oder vermischt mit einem geringen Anteil Polyolefin als sog. Masterbatch, zugefügt werden.

Je nach verwendetem Verfahren können die bevorzugten Treibmittel ggf. variieren. Beim Suspensionsverfahren verwendet man als Treibmittel bevorzugt organische Flüssigkeiten oder anorganische Gase oder Gemische davon. Als Flüssigkeiten kommen halogenierte Kohlenwasserstoffe in Frage, bevorzugt sind jedoch gesättigte, aliphatische Kohlenwasserstoffe, insbesondere solche mit 3 bis 8 C-Atomen. Besonders bevorzugt ist n-Butan. Geeignete anorganische Gase sind Stickstoff, Luft, Ammoniak oder Kohlendioxid.

Bei der Herstellung via Extrusionsverfahren verwendet man als Treibmittel bevorzugt flüchtige organische Verbindungen mit einem Siedepunkt bei Normaldruck 1013 mbar von -5 bis 150, insbesondere 25 bis 125°C. Gut geeignet sind Kohlenwasserstoffe (bevorzugt halogenfrei), insbesondere C₄₋₁₀-Alkane, beispielsweise die Isomere des Pentans, Hexans, Heptans und Octans, besonders bevorzugt s-Pentan. Geeignete Treibmittel sind außerdem sterisch anspruchsvollere Verbindungen wie Alkohole, Ketone, Ester, Ether und organische Carbonate. Bevorzugte Ketone sind 3,3-Dimethyl-2-butanon (= Pinakolon bzw. veraltet Pinakolin) und 4-Methyl-2-pentanon (= Methylisobutylketon). Als Ester kann man bevorzugt Isobutylacetat verwenden.

Auch Halogenkohlenwasserstoffe können verwendet werden, jedoch ist dies nicht besonders bevorzugt. Besonders bevorzugt ist das Treibmittel halogenfrei. Geringe Anteile halogenhaltiger Treibmittel im Treibmittelgemisch sollen jedoch nicht ausgeschlossen werden. Es versteht sich, dass auch Mischungen der genannten Treibmittel verwendet werden können.

Durch Verwendung der erfindungsgemäßen Nukleierungsmittel ist die erforderliche Treibmittelmenge geringer als bei den Verfahren des Standes der Technik und beträgt bevorzugt 0,1 bis 15, insbesondere 0,5 bis 14 und besonders bevorzugt 1 bis 13 Gew.-Teile, bezogen auf 100 Gew.-Teile eingesetztes Polyolefin.

Erfindungsgegenstand ist daher auch ein Verfahren zur Herstellung der erfindungsgemäßenexpandierten Polyolefinpartikel aus einem Polyolefin, einem partikelförmigen Nukleierungsmittel und einem Treibmittel, dadurch gekennzeichnet, dass man das Nukleierungsmittel auswählt aus Perylen-Verbindungen, Phthalocyanin-Verbindungen, Chinophthalon-Verbindungen und Isoindolin-Verbindungen, und dass man 0,1 bis 15 Gew.-Teile Treibmittel, bezogen auf 100 Gew.-Teile eingesetztes Polyolefin, verwendet.

Bevorzugt ist das Verfahren dadurch gekennzeichnet, dass das Nukleierungsmittel ausgewählt ist aus Pigment Red 123 (71145), Pigment Red 149 (71137), Pigment Red 178 (71155), Pigment Red 179 (71130), Pigment Red 190 (71140), Pigment Red 224 (71127), Pigment Violet 29 (71129), Pigment Black 31 (71132), Pigment Black 32 (71133); Pigment Blue 15 (74160), Pigment Blue 15:1 (74160), Pigment Blue 15:2 (74160), Pigment Blue 15:3 (74160), Pigment Blue 15:4 (74160), Pigment Blue 15:6 (74160), Pigment Blue 16 (74100), Pigment Green 7 (74260), Pigment Green 36 (74265); Pigment Yellow 138 (56300); Pigment Yellow 139 (56298), Pigment Yellow 185 (56280), Pigment Orange 66 (48210), Pigment Orange 69 (56292) und Pigment Red 260 (56295), wobei in Klammern die Formelnummer des Colour Index C.I. angegeben ist.

Zusätzlich zu den vorstehenden, erfindungsgemäßen Nukleierungsmitteln können sonstige, aus dem Stand der Technik bekannte Nukleierungsmittel verwendet werden. Erforderlich sind solche zusätzlichen Nukleierungsmittel in der Regel jedoch nicht, und die Verwendung zusätzlicher Nukleierungsmittel ist nicht bevorzugt.

Als zusätzliche Nukleierungsmittel eignen sich beispielsweise Talkum, Wachse, insbesondere Polyolefinwachse wie z.B. Homo- oder Copolymere des Ethylens, außerdem Paraffine, Ruße, Graphitpulver, Kieselsäuren, bevorzugt pyrogene Kieselsäuren, weiterhin Zeolithe, Citronensäureester und Bentonite, insbesondere modifizierte Bentonite, oder deren Mischungen. Die Menge der zusätzlichen Nukleierungsmittel beträgt bei der Herstellung via Suspension üblicherweise 0 bis 10, vorzugsweise 0 bis 5 Gew.-Teile, bezogen auf 100 Gew.-Teile expandierte Polyolefinpartikel.

Das erfindungsgemäße expandierte Polyolefin kann außerdem die üblichen Zusatzstoffe enthalten. Solche Zusatzstoffe sind z.B. Antioxidantien, Stabilisatoren, Flammschutzmittel, Wachse, Füllstoffe, Pigmente und Farbstoffe. Sie werden in üblichen, an sich bekannten Mengen verwendet. Insbesondere kann man Ruß oder andere schwarze Farbmittel verwenden, um die erfindungsgemäßen Partikel schwarz einzufärben. Hierzu reichen 0,01 bis 10, bevorzugt 0,1 bis 6 Gew.-% Ruß bzw. schwarzes Farbmittel, bezogen auf die Partikel, aus.

Beim Suspensionsverfahren arbeitet man in der Regel absatzweise in einem Imprägnierbehälter, z.B. in einem Rührkesselreaktor. In den Reaktor werden das Polyolefin, z.B. als nukleierungsmittelhaltiges Minigranulat, eindosiert, außerdem Wasser bzw. ein anderes Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das Polyolefin, verwendet. Zu Einzelheiten siehe beispielsweise die EP-A 1 095 971.

Danach wird der Reaktor verschlossen und der Reaktorinhalt auf eine Imprägniertemperatur von üblicherweise mindestens 100°C erhitzt. Die Treibmittel kann dabei vor, während oder nach dem Aufheizen des Reaktorinhalts zugefügt werden. Die Imprägniertemperatur sollte in der Nähe der Erweichungstemperatur des Polyolefins liegen. Bei Polypropylen sind Imprägniertemperaturen von 110 bis 180, insbesondere 130 bis 160°C bevorzugt.

Je nach Menge und Art des Treibmittels sowie nach der Höhe der Temperatur stellt sich im verschlossene Reaktor ein Druck (Imprägnierdruck) ein, der im allgemeinen 2 bis 100 bar (absolut) beträgt. Erforderlichenfalls kann man den Druck durch ein Druckregelventil oder Nachpressen von Treibmittel regulieren. Bei den Imprägnierbedingungen erhöhte Temperatur und Überdruck diffundiert Treibmittel in die Polymergranulatpartikel hinein. Die Imprägnierdauer beträgt im allgemeinen 0,5 bis 10 Stunden. Weitere Einzelheiten sind beispielsweise der EP-A 1 095 971 zu entnehmen.

In einer Ausführungsform des Suspensionsverfahrens wird nach dem Imprägnieren die erhitzte Suspension auf üblicherweise unter 100°C abgekühlt, wodurch sich das Polyolefin wieder verfestigt und das Treibmittel einschließt. Danach wird entspannt. Man erhält expandierbare Polyolefinpartikel, die schließlich in üblicher Weise aus der Suspension abgetrennt werden. Anhaftendes Wasser wird in der Regel durch Trocknen z.B. im Stromtrockner, entfernt. Falls erforderlich kann man davor oder danach anhaftendes Suspensionshilfsmittel entfernen, indem man die Partikel mit einem geeigneten Reagens behandelt. Beispielsweise kann man mit einer Säure wie Salpetersäure, Salzsäure oder Schwefelsäure behandeln, um säurelösliche Suspensionshilfsmittel, z.B. Metallcarbonate oder Tricalciumphosphat, zu entfernen.

Die erhaltenen expandierbaren Polyolefinpartikel werden anschließend durch Erwärmen zu den expandierten Polyolefinpartikeln verschäumt, wie es weiter unten beschrieben wird.

In einer anderen Ausführungsform des Suspensionsverfahrens, auch Explosionsexpansionsverfahren oder Dokan-Verfahren (siehe EP-A 611 795) genannt, wird die erhitzte Suspension nicht abgekühlt, sondern heiß ohne Abkühlen schlagartig entspannt. Beim Entspannen expandiert das zuvor in die Polyolefinpartikel diffundierte Treibmittel "explosionsartig" und schäumt die erweichten Partikel auf. Man erhält expandierte Polyolefinpartikel.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst. Das zusätzliche Eindosieren anorganischer Gase, um bestimmte Anfangs- und Enddrucke einzuhalten wie in der DE-A 3431245, ist nicht erforderlich. In der Regel kühlt man die Suspension nach dem Entspannen ab, trennt die expandierten Polyolefinpartikel in üblicher Weise aus der Suspension ab, entfernt ggf. davor oder danach anhaftendes Suspensionshilfsmittel wie bereits beschrieben, und wäscht und trocknet schließlich die Partikel.

Beim Extrusionsverfahren werden dem Extruder das Polyolefin, das Treibmittel, das Nukleierungsmittel, und ggf. Zusatzstoffe gemeinsam (als Mischung) oder getrennt voneinander, an einer oder an verschiedenen Stellen des Extruders zugeführt. Dabei ist es möglich, jedoch nicht erforderlich, vorab aus den festen Komponenten eine Mischung herzustellen. Beispielsweise kann man zunächst Polyolefin, Nukleierungsmittel und ggf. Zusatzstoffe mischen und die Mischung dem Extruder zuführen, wonach dem Extruder das Treibmittel zugeführt wird, d.h. der Extruder mischt das Treibmittel in eine Polymerschmelze ein. Ebenso kann man dem Extruder eine Mischung von Treibmittel und Nukleierungsmittel zuführen, d.h. das Nukleierungsmittel erst mit dem Treibmittel zugeben.

Im Extruder werden die genannten Einsatzstoffe unter Aufschmelzen des Polyolefins vermischt. Als Extruder kommen alle üblichen Schneckenmaschinen in Betracht, insbesondere Einschnecken- und Doppelschneckenextruder (z.B. Typ ZSK von Fa. Werner & Pfleiderer), Ko-Kneter, Kombiplast-Maschinen, MPC-Knetmischer, FCM-Mischer, KEX-Knetschneckenextruder und Scherwalzenextruder, wie sie z.B. in Saechtling (Hg.), Kunststoff-Taschenbuch, 27. Auflage, Hanser-Verlag München 1998, Kap. 3.2.1 und 3.2.4, beschrieben sind. Der Extruder wird üblicherweise bei einer Temperatur betrieben, bei der das Polyolefin als Schmelze vorliegt, beispielsweise bei 130 bis 250, insbesondere 160 bis 220°C.

Drehzahl, Länge, Durchmesser und Ausgestaltung der Extruderschnecke(n), zugeführte Mengen und Extruderdurchsatz werden in bekannter Weise derart gewählt, dass im extrudierten Polyolefin das Nukleierungsmittel und ggf. die Zusatzstoffe gleichmäßig verteilt sind.

In einer Ausführungsform des Extrusionsverfahrens stellt man expandierbare Partikel her. Um zu verhindern, dass die treibmittelhaltige Schmelze bereits beim Austritt aus dem Extruder aufschäumt, wird der Schmelzestrang bei solchen Temperatur- und Druckbedingungen ausgepresst und granuliert, dass praktisch kein Aufschäumen (Expandieren) erfolgt. Diese Bedingungen können nach Art und Menge der Polymere, der Zusatzstoffe und insbesondere des Treibmittels verschieden sein. Die optimalen Bedingungen lassen sich durch Vorversuche einfach ermitteln.

Eine technisch günstige Methode ist die Unterwassergranulierung in einem Wasserbad, das eine Temperatur unter 100°C aufweist und unter einem Druck von mindestens 2 bar (absolut) steht. Die Temperatur darf nicht zu tief sein, da sonst die Schmelze an der Düsenplatte erstarrt, und sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Wasserdruck sein. Bei dem besonders bevorzugt Treibmittel s-Pentan liegt die optimale Wasserbadtemperatur bei 30 bis 60°C und der optimale Wasserdruck bei 8 bis 12 bar (absolut). Statt Wasser kann man auch andere geeignete Kühlmedien verwenden. Ebenso kann man eine Wasserringgranulierung anwenden. Dabei ist der Schneidraum derart eingekapselt, dass die Granuliervorrichtung unter Druck betrieben werden kann.

Man erhält auf diese Weise expandierbare Polyolefinpartikel, die anschließend vom Wasser abgetrennt und ggf. getrocknet werden. Danach werden sie zu expandierten Polyolefinpartikeln verschäumt wie weiter unten beschrieben.

In einer anderen Ausführungsform des Extrusionsverfahrens wird die treibmittelhaltige Schmelze ohne Unterwassergranulierung, Wasserringgranulierung oder sonstige Vorkehrungen, die ein Schäumen verhindern, ausgepresst und granuliert. Beispielsweise kann man direkt in die Atmosphäre auspressen. Dabei schäumt der ausgepresste Schmelzestrang auf, und durch Granulieren des aufgeschäumten Strangs erhält man expandierte Polyolefinpartikel.

Sofern man expandierbare Partikel erhält, werden diese in an sich bekannter Weise aufgeschäumt (verschäumt), wobei die erfindungsgemäßen expandierten Polyolefinpartikel entstehen. Das Verschäumen erfolgt in der Regel durch Erwärmen der expandierbaren Partikel in üblichen Verschäumungsvorrichtungen, z.B. mit Heißluft oder überhitztem Wasserdampf in einem sog. Druckvorschäumer, wie er zur Verarbeitung von expandierbarem Polystyrol (EPS) üblich ist. Bevorzugt verschäumt man die Partikel bei einer Temperatur, bei der sie erweichen (Erweichungsbereich), z.B. bei Temperaturen von 100 bis 180°C.

Verschäumt man mit Wasserdampf, so beträgt je nach Art und Menge von Polyolefin und Treibmittel, und der gewünschten Dichte des herzustellenden Schaums, der Druck des Wasserdampfs üblicherweise 2 bis 8, bevorzugt 1 bis 5 bar (absolut). Dabei ergeben höhere Drucke geringere Dichten des verschäumten Polyolefins, d.h. mit dem Wasserdampfdruck kann man die gewünschte Dichte einstellen. Die Dauer des Verschäumens beträgt üblicherweise 1 bis 300, bevorzugt 1 bis 30 sec. Nach dem Verschäumen wird entspannt und abgekühlt. Bevorzugt beträgt der Expansionsfaktor beim Verschäumen 2 bis 50.

Die Polyolefinpartikel können vor und/oder nach dem Verschäumen mit einem Antiblockingmittel versehen werden. Geeignete Antiblockingmittel sind z.B. Talkum, Metallverbindungen wie Tricalciumphosphat, Calciumcarbonat, Kieselsäuren, insbesondere pyrogene Kieselsäuren wie Aerosil® von Fa. Degussa, Salze langkettiger (z.B. C₁₀₋₂₂) Carbonsäuren, beispielsweise Stearinsäuresalze wie Calciumstearat, Ester langkettiger Carbonsäuren, z.B. Glycerinester wie die Glycerinstearate, und Silikonöle. Das Antiblockingmittel wird in der Regel durch Mischen, Aufsprühen, Auftrommeln oder andere übliche Verfahren auf die Partikel aufgebracht. Es wird üblicherweise in Mengen von 0,01 bis 20, bevorzugt 0,1 bis 10, besonders bevorzugt 0,5 bis 6 Gew.-Teilen, bezogen auf 100 Gew.-Teile des Polyolefins, verwendet.

Man erhält in jedem Falle expandierte Polyolefinpartikel mit einer geringen Schüttdichte. Sie beträgt erfindungsgemäß maximal 70 g/l, insbesondere mindestens 5 g/l. Bevorzugte Schüttdichten liegen bei 10 bis 70 g/l, und besonders bevorzugt 15 bis 60 g/l.

Die expandierten Partikel sind in der Regel zumindest annähernd kugelförmig und weisen üblicherweise einen Durchmesser von 0,2 bis 20, bevorzugt 0,5 bis 15 und insbesondere 1 bis 12 mm auf. Bei nicht kugelförmigen, z.B. länglichen oder zylinderförmigen Partikeln, ist mit Durchmesser die längste Abmessung gemeint.

Aus den erfindungsgemäßen Polyolefinpartikeln kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoffhalbzeuge und Schaumstoff Formteile ein.

Gegenstand der Erfindung ist daher auch die Verwendung der expandierten Polyolefinpartikel zur Herstellung von Polyolefin-Schaumstoffen, sowie Polyolefin-Schaumstoffe, erhältlich aus den expandierten Polyolefinpartikeln.

Obwohl die erfindungsgemäßen Polyolefinpartikel mit maximal 70 g/l eine geringe Schüttdichte aufweisen, ist zu ihrer Herstellung nur wenig Treibmittel erforderlich, insbesondere weniger Treibmittel als nach den Verfahren des Standes der Technik, und es können alle üblichen Polyolefine und nicht nur Metallocen-Polyolefine, eingesetzt werden. Beim Explosionsexpansionsverfahren müssen keine anorganischen Gase zudosiert werden, um bestimmte Druckbedingungen einzuhalten.

### Beispiel:

In einem Zweischneckenextruder wurden bei 220°C
- 97,8 Gew.-% eines Propylen-Randomcopolymers enthaltend ca. 2 Gew.-% Ethylen, mit einer Melt Flow Rate (ISO 1133) von 8,0 g/10 min bei 230°C und 2,16 kg Belastung,
- 0,1 Gew.-% des Antioxidans Pentaerythritol-tetrakis[3-(3,5-di-tert-butyl-4-hydroxyphenyl)propionat]; es wurde das Handelsprodukt Irganox® 1010 von Ciba Specialty Chemicals verwendet,
- 0,1 Gew.-% des Gleitmittels Calciumstearat, und
- 2 Gew.-% des Nukleierungsmittels Pigment Red 179 (Colour Index Nr. 71130); es wurde das Handelsprodukt Paliogen® Rot K4180 von BASF verwendet
unter Aufschmelzen des Propylenpolymers vermischt, extrudiert, und das abgekühlte, erstarrte Extrudat mit einem üblichen Granulator zu einem zylinderförmigen Minigranulat zerkleinert. Der Durchmesser des Granulats betrug 0,8 bis 1,2 mm, die Länge 2,0 bis 2,3 mm.

In einem geschlossenen Rührkessel wurden unter Rühren 100 kg des erhaltenen Minigranulats und 6,7 kg Tricalciumphosphat in 245 kg Wasser bei 20°C dispergiert. Nach Zugabe von 12 kg n-Butan erhitzte man den Reaktorinhalt innerhalb 75 min auf 140°C, wobei sich ein Druck von ca. 19 bar (absolut) einstellte. Nach Erreichen dieser Endtemperatur entspannte man den Reaktorinhalt durch eine im Reaktorboden befindliche Düse in einen Zwischenbehälter. Die erhaltenen expandierten Polypropylenpartikel wurden abgetrennt und das Tricalciumphosphat wurde durch Behandeln mit Salpetersäure entfernt. Anschließend wurden die Partikel gewaschen und im Stromtrockner getrocknet. Die Schüttdichte der erhaltenen expandierten Partikel betrug 26,3 g/l.

## Patentansprüche

1. Expandierte Polyolefinpartikel mit einer Schüttdichte von maximal 70 g/l, enthaltend 0,1 bis 10 Gew.-%, bezogen auf das expandierte Polyolefin, mindestens eines partikelförmigen Nukleierungsmittels ausgewählt aus Perylen-Verbindungen, Phthalocyanin-Verbindungen, Chinophthalon-Verbindungen und Isoindolin-Verbindungen.

2. Expandierte Polyolefinpartikel nach Anspruch 1, **dadurch gekennzeichnet, dass** sie 0,5 bis 6 Gew.-% des Nukleierungsmittels enthalten.

3. Expandierte Polyolefinpartikel nach den Ansprüchen 1 bis 2, **dadurch gekennzeichnet, dass** man als Polyolefin, Polypropylen verwendet.

4. Expandierte Polyolefinpartikel nach den Ansprüchen 1 bis 3, **dadurch gekennzeichnet, dass** man als Perylen-Verbindung Perylen-Pigmente verwendet, ausgewählt aus Pigment Red 123 (71145), Pigment Red 149 (71137), Pigment Red 178 (71155), Pigment Red 179 (71130), Pigment Red 190 (71140), Pigment Red 224 (71127), Pigment Violet 29 (71129), Pigment Black 31 (71132) und Pigment Black 32 (71133), wobei in Klammem die Formelnummer des Colour Index C.I. angegeben ist.

5. Expandierte Polyolefinpartikel nach den Ansprüchen 1 bis 3, **dadurch gekennzeichnet, dass** man als Phthalocyanin-Verbindung Phthalocyanin-Pigmente verwendet, ausgewählt aus Pigment Blue 15 (74160), Pigment Blue 15:1 (74160), Pigment Blue 15:2 (74160), Pigment Blue 15:3 (74160), Pigment Blue 15:4 (74160), Pigment Blue 15:6 (74160), Pigment Blue 16 (74100), Pigment Green 7 (74260) und Pigment Green 36 (74265), wobei in Klammem die Formelnummer des Colour Index C.I. angegeben ist.

6. Expandierte Polyolefinpartikel nach den Ansprüchen 1 bis 3, **dadurch gekennzeichnet, dass** man als Chinophthalon-Verbindung das Chinophthalon-Pigment Pigment Yellow 138 (56300) verwendet, wobei in Klammem die Formelnummer des Colour Index C.I. angegeben ist.

7. Expandierte Polyolefinpartikel nach den Ansprüchen 1 bis 3, **dadurch gekennzeichnet, dass** man als Isoindolin-Verbindung Isoindolin-Pigmente verwendet, ausgewählt aus Pigment Yellow 139 (56298), Pigment Yellow 185 (56280), Pigment Orange 66 (48210), Pigment Orange 69 (56292) und Pigment Red 260 (56295), wobei in Klammem die Formelnummer des Colour Index C.I. angegeben ist.

8. Verfahren zur Herstellung der expandierten Polyolefinpartikel gemäß den Ansprüchen 1 bis 7 aus einem Polyolefin, einem partikelförmigen Nukleierungsmittel und einem Treibmittel, **dadurch gekennzeichnet, dass** man das Nukleierungsmittel auswählt aus Perylen-Verbindungen, Phthalocyanin-Verbindungen, Chinophthalon-Verbindungen und Isoindolin-Verbindungen, und dass man 0,1 bis 15 Gew.-Teile Treibmittel, bezogen auf 100 Gew.-Teile eingesetztes Polyolefin, verwendet.

9. Verfahren nach Anspruch 8, **dadurch gekennzeichnet, dass** das Nukleierungsmittel ausgewählt ist aus den in den Ansprüchen 4 bis 7 genannten Verbindungen.

10. Verwendung der expandierten Polyolefinpartikel gemäß den Ansprüchen 1 bis 7 zur Herstellung von Polyolefin-Schaumstoffen.

11. Polyolefin-Schaumstoffe, erhältlich aus den expandierten Polyolefinpartikeln gemäß den Ansprüchen 1 bis 7.

## Claims

1. An expanded polyolefin bead having a maximum bulk density of 70 g/l, comprising from 0.1 to 10% by weight, based on the expanded polyolefin, of at least one particulate nucleating agent selected from perylene compounds, phthalocyanine compounds, quinophthalone compounds and isoindoline compounds.

2. The expanded polyolefin bead according to claim 1, which comprises from 0.5 to 6% by weight of the nucleating agent.

3. The expanded polyolefin bead according to claims 1 to 2, wherein the polyolefin used is polypropylene.

4. The expanded polyolefin bead according to claims 1 to 3, wherein the perylene compound used is a perylene pigment selected from Pigment Red 123 (71145), Pigment Red 149 (71137), Pigment Red 178 (71155), Pigment Red 179 (71130), Pigment Red 190 (71140), Pigment Red 224 (71127), Pigment Violet 29 (71129), Pigment Black 31 (71132) and Pigment Black 32 (71133), with the Colour Index C.I. formula number specified in brackets.

5. The expanded polyolefin bead according to claims 1 to 3, wherein the phthalocyanine compound used is a phthalocyanine pigment selected from Pigment Blue 15 (74160), Pigment Blue 15:1 (74160), Pigment Blue 15:2 (74160), Pigment Blue 15:3 (74160), Pigment Blue 15:4 (74160), Pigment Blue 15:6 (74160), Pigment Blue 16 (74100), Pigment Green 7 (74260) and Pigment Green 36 (74265), with the Colour Index C.I. formula number specified in brackets.

6. The expanded polyolefin bead according to claims 1 to 3, wherein the quinophthalone compound used is the quinophthalone pigment Pigment Yellow 138 (56300), with the Colour Index C.I. formula number specified in brackets.

7. The expanded polyolefin bead according to claims 1 to 3, wherein the isoindoline compound used is an isoindoline pigment selected from Pigment Yellow 139 (56298), Pigment Yellow 185 (56280), Pigment Orange 66 (48210), Pigment Orange 69 (56292) and Pigment Red 260 (56295), with the Colour Index C.I. formula number specified in brackets.

8. A process for producing the expanded polyolefin bead according to claims 1 to 7 from a polyolefin, a particulate nucleating agent and a blowing agent, which comprises selecting the nucleating agent from perylene compounds, phthalocyanine compounds, quinophthalone compounds and isoindoline compounds, and using from 0.1 to 15 parts by weight of blowing agent based on 100 parts by weight of polyolefin used.

9. The process according to claim 8, wherein the nucleating agent is selected from the compounds specified in claims 4 to 7.

10. The use of the expanded polyolefin bead according to claims 1 to 7 for producing polyolefin foams.

11. A polyolefin foam obtainable from the expanded polyolefin bead according to claims 1 to 7.

## Revendications

1. Particules de polyoléfine expansées d'une densité en vrac de maximum 70 g/L, contenant 0,1 à 10% en poids, sur base de la polyoléfine expansée, d'au moins un agent de nucléation en forme de particule choisi parmi les composés de pérylène, les composés de phtalocyanine, les composés de quinophtalone et les composés d'isoindoline.

2. Particules de polyoléfine expansées selon la revendication 1, **caractérisées en ce qu'**elles contiennent de 0,5 à 6% en poids de l'agent de nucléation.

3. Particules de polyoléfine expansées selon les revendications 1 à 2, **caractérisées en ce qu'**on utilise comme polyoléfine du polypropylène.

4. Particules de polyoléfine expansées selon les revendications 1 à 3, **caractérisées en ce qu'**on utilise comme composé de pérylène des pigments de pérylène choisis parmi les Pigment Rouge 123 (71145), Pigment Rouge 149 (71137), Pigment Rouge 178 (71155), Pigment Rouge 179 (71130), Pigment Rouge 190 (71140), Pigment Rouge 224 (71127), Pigment Violet 29 (71129), Pigment Noir 31 (71132) et Pigment Noir 32 (71133), le numéro de formule de l'indice des couleurs C.I. étant indiqué entre parenthèses.

5. Particules de polyoléfine expansées selon les revendications 1 à 3, **caractérisées en ce qu'**on utilise comme composé de phtalocyanine des pigments de phtalocyanine choisis parmi les Pigment Bleu 15 (74160), Pigment Bleu 15:1 (74160), Pigment Bleu 15:2 (74160), Pigment Bleu 15:3 (74160), Pigment Bleu 15:4 (74160), Pigment Bleu 15:6 (74160), Pigment Bleu 16 (74100), Pigment Vert 7 (74260) et Pigment Vert 36 (74265), le numéro de formule de l'indice des couleurs C.I. étant indiqué entre parenthèses.

6. Particules de polyoléfine expansées selon les revendications 1 à 3, **caractérisées en ce qu'**on utilise comme composé de quinophtalone des pigments de quinophtalone Pigment Jaune 138 (56300), le numéro de formule de l'indice des couleurs C.I. étant indiqué entre parenthèses.

7. Particules de polyoléfine expansées selon les revendications 1 à 3, **caractérisées en ce qu'**on utilise comme composé d'isoindoline des pigments d'isoindoline choisis parmi les Pigment Jaune 139 (56298), Pigment Jaune 185 (56280), Pigment Orange 66 (48210), Pigment Orange 69 (56292) et Pigment Rouge 260 (56295), le numéro de formule de l'indice des couleurs C.I. étant indiqué entre parenthèses.

8. Procédé de fabrication des particules de polyoléfine expansées selon les revendications 1 à 7 à partir d'une polyoléfine, d'un agent de nucléation en forme de particule et d'un agent gonflant, **caractérisé en ce qu'**on utilise l'agent de nucléation choisi parmi les composés de pérylène, les composés de phtalocyanine, les composés de quinophtalone et les composés d'isoindoline et **en ce qu'**on utilise de 0,1 à 15 parties en poids d'un agent gonflant, sur base de 100 parties en poids de la polyoléfine employée.

9. Procédé selon la revendication 8, **caractérisé en ce que** l'agent de nucléation est choisi parmi les composés cités dans les revendications 4 à 7.

10. Utilisation des particules de polyoléfine expansées selon les revendications 1 à 7 pour la fabrication de mousses de polyoléfine.

11. Mousses de polyoléfine qu'on obtient à partir des particules de polyoléfine expansées selon les revendications 1 à 7.
